(19) Europäisches Patentamt

European Patent Office

Office européen des brevets

(11) **EP 0 926 926 B1**

(12) **FASCICULE DE BREVET EUROPEEN**

(45) Date de publication et mention
de la délivrance du brevet:
**02.11.2006   Bulletin 2006/44**

(51) Int Cl.:
*H05B 6/06* *(2006.01)*        *H02M 7/48* *(2006.01)*

(21) Numéro de dépôt: **98403285.4**

(22) Date de dépôt: **23.12.1998**

(54) **Dispositif d'alimentation de plusieurs circuits résonants par un générateur de puissance à onduleur**

Gerät zur Versorgung einer Vielzahl von Schwingkreisen durch einen Wechselrichter-Stromgenerator

Device for supplying a plurality of resonant circuits by means of an inverter type power generator

(84) Etats contractants désignés:
**DE ES FR NL**

(30) Priorité: **23.12.1997   FR 9716343**

(43) Date de publication de la demande:
**30.06.1999   Bulletin 1999/26**

(73) Titulaire: **Brandt Industries**
**92500 Rueil Malmaison (FR)**

(72) Inventeurs:
• **Cornec, René**
  **94117 Arcueil Cedex (FR)**
• **Gaspard, Jean-Yves**
  **94117 Arcueil Cedex (FR)**
• **Forest, François**
  **94117 Arcueil Cedex (FR)**
• **Melhem, Wissam**
  **94117 Arcueil Cedex (FR)**

(74) Mandataire: **Santarelli**
**14, avenue de la Grande Armée**
**75017 Paris (FR)**

(56) Documents cités:
**EP-A- 0 188 980        US-A- 4 092 510**
**US-A- 4 151 387**

• **PATENT ABSTRACTS OF JAPAN vol. 017, no. 608 (E-1457), 9 novembre 1993 & JP 05 190263 A (FUJI ELECTRIC CO LTD), 30 juillet 1993**

EP 0 926 926 B1

# Description

L'invention se rapporte à un dispositif d'alimentation de plusieurs inducteurs par un générateur de puissance à onduleur.

Il est connu d'utiliser un générateur de puissance à onduleur pour alimenter un inducteur monté en série avec un condensateur. L'inducteur peut être assimilé à une inductance et une résistance. L'inducteur et le condensateur forment alors un circuit résonant connu sous le nom de circuit RLC. Le générateur de puissance, alimentant ce circuit résonant, comporte par exemple un redresseur d'une tension secteur alternative suivi d'un onduleur comprenant deux transistors. Pour régler la puissance absorbée par le circuit résonant, on peut agir sur la fréquence de cycles successifs de conduction et de non conduction des transistors. Par la suite, on appellera cette fréquence, fréquence de travail $f_T$. On peut aussi agir sur le rapport entre les durées de conduction et de non conduction des transistors, sur une période de travail.

Dans une table de cuisson à induction, on a le plus souvent plusieurs inducteurs. Il est connu d'utiliser pour chaque inducteur un générateur de puissance distinct. Un premier inconvénient de cette solution concerne le prix. En effet, un générateur est un élément onéreux. Un autre inconvénient de cette solution est qu'elle peut entraîner des interférences entre les différents sous-ensembles. On définit ici un sous-ensemble comme comportant un générateur et le circuit résonant qu'il alimente. En effet, lorsque deux sous-ensembles fonctionnent à des fréquences de travail voisines, certains composants, électriques ou mécaniques peuvent être excités à une fréquence égale à la différence entre les fréquences de travail des deux sous-ensembles. Cela peut, entre autres inconvénients, conduire à des bruits audibles gênants pour un utilisateur.

Pour pallier ces inconvénients, d'autres dispositifs ont été conçus pour n'utiliser qu'un seul générateur servant à alimenter plusieurs inducteurs. Ces dispositifs prévoient d'alimenter chaque inducteur de façon cyclique, c'est-à-dire l'un après l'autre. Ces dispositifs nécessitent des moyens de commutation rapide. Ces moyens, relais ou semi-conducteurs, sont généralement onéreux. Ils peuvent être bruyants dans le cas de relais.

Ils peuvent entraîner des perturbations sur la tension secteur en y puisant la puissance de façon saccadée. US-A-4092510 divulgue un dispositif d'alimentation de plusieurs inducteurs par un générateur à onduleur dans lequel la puissance consommée par chaque circuit résonant est réglée en modifiant l'impédance de chaque circuit résonant.

L'invention à pour but de pallier les inconvénients précédemment cités en n'utilisant qu'un seul générateur pour alimenter plusieurs inducteurs sans utiliser de moyens de commutation rapide. La cuisson domestique par induction est un domaine où l'invention trouve une utilité particulière. Mais il est bien entendu que l'invention n'est pas limitée à ce domaine, elle peut être mise en oeuvre chaque fois qu'on souhaite alimenter plusieurs circuits résonants, quelque soit le domaine d'utilisation : cuisson domestique ou autre.

Pour atteindre ce but, l'invention a pour objet un dispositif d'alimentation de plusieurs circuits résonants montés en parallèle par un générateur de puissance à onduleur. Le dispositif est caractérisé en ce que chaque circuit résonant a une fréquence de résonance distincte, en ce que le générateur alimente en permanence les circuits résonants et en ce que le réglage de la puissance consommée par chaque circuit résonant est réalisé en modifiant la fréquence de travail de l'onduleur.

L'invention sera mieux comprise et d'autres avantages apparaîtront à la lecture de la description détaillée d'un mode de réalisation illustré par le dessin annexé, sur lequel :

- la figure 1 représente le schéma de principe général de l'invention adapté à une structure demi-pont de l'onduleur;
- la figure 2 représente le schéma de principe général de l'invention adapté à une structure en pont complet de l'onduleur :
- la figure 3 représente le schéma d'une variante d'un circuit résonant du troisième ordre ;
- la figure 4 représente le schéma de principe général de l'invention où plusieurs capacités peuvent être mises en parallèles.

Par souci de simplicité, les mêmes éléments porteront les mêmes références dans les différentes figures.

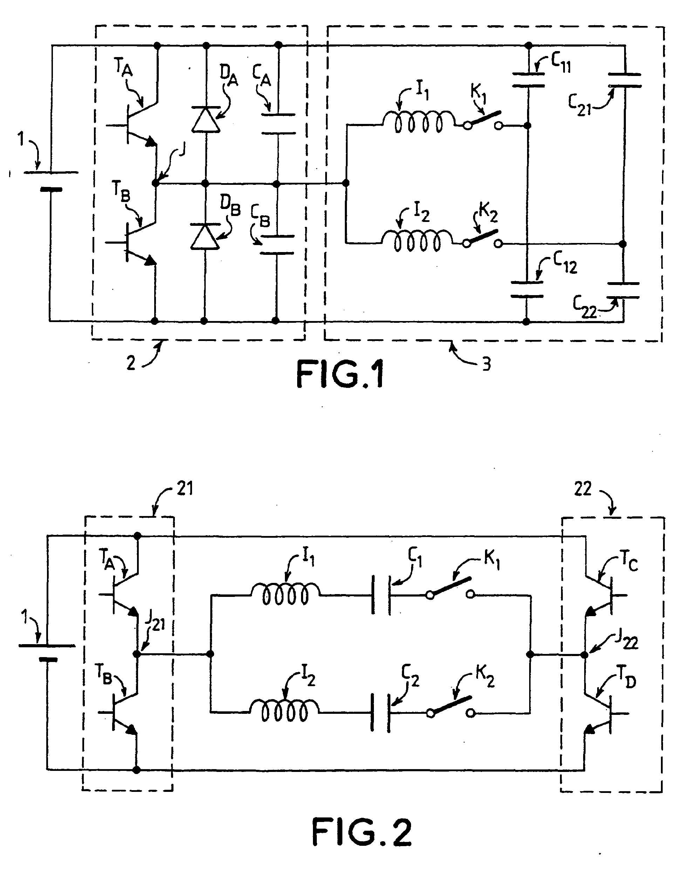

La figure 1 permet de mieux comprendre le principe général de l'invention. Une source de tension continue 1 est par exemple réalisée en redressant une tension secteur alternative 230 V. Le mode de réalisation de la source de tension continue 1 n'est pas représenté en figure 1. La structure d'un onduleur 2 est en demi-pont. Cet onduleur 2 comporte deux transistors $T_A$ et $T_B$ montés en série entre les deux bornes positive et négative de la source de tension continue 1. On a choisi de représenter deux transistors bipolaires $T_A$ et $T_B$, mais il est bien entendu que l'onduleur 2 peut fonctionner avec tous moyens de commutation électronique comme par exemple des thyristors, des transistors à effet de champ ou des interrupteurs de type transistor commandés en tension, connus dans la littérature anglosaxonne sous le nom de IGBT (Insulated Gate Bipolar Transistor). Le moyen de commande des deux transistors $T_A$ et $T_B$ par leur base n'est pas représenté sur la figure 1. Ce moyen commande essentiellement la fréquence $f_T$ à laquelle les transistors $T_A$ et $T_B$ sont conducteurs et se bloquent. Un exemple de réalisation d'un tel moyen de commande est décrit dans le brevet GB 2 175 154. De plus, l'onduleur 2 comporte avantageusement deux diodes $D_A$ et $D_B$ appelées diodes de roue libre. La cathode de la diode $D_A$ est raccordée au pôle positif de la source de tension continue 1. L'anode de la diode $D_A$ et la cathode de la diode $D_B$ sont raccordées au point de jonction J des deux transistors $T_A$ et $T_B$. L'anode de $D_B$ est raccordée au pôle négatif de la source de tension continue 1. En outre, l'onduleur 2 comporte avantageusement deux capacités $C_A$ et $C_B$ d'aide à la commutation des transistors $T_A$ et $T_B$. $C_A$ est raccordé entre le pôle positif de la source de tension continue 1 et le point de jonction J. $C_B$ est raccordé entre le point de jonction J et le pôle négatif de la source de tension continue 1.

L'onduleur 2 transmet l'énergie de la source de tension continue 1 à plusieurs circuits résonants montés en parallèle. Ces circuits résonants sont représentés à l'intérieur du cadre 3 de la figure 1. Ces circuits résonants sont raccordés entre le point de jonction J et les pôles positif et négatif de la source de tension continue 1. La figure 1 ne représente que deux circuits résonants, il est bien entendu que l'invention ne se limite pas à l'alimentation de deux circuits résonants et qu'elle peut être mise en oeuvre pour un plus grand nombre de circuits résonants.

Chaque circuit résonant comporte un inducteur référencé $I_1$ pour le premier circuit résonant et $I_2$ pour le deuxième circuit résonant. Le premier circuit résonant comporte en outre un interrupteur $K_1$ et deux capacités $C_{11}$ et $C_{12}$. Le deuxième circuit résonant comporte en outre un interrupteur $K_2$ et deux capacités $C_{21}$ et $C_{22}$. Les interrupteurs $K_1$ et $K_2$ sont par exemple des relais. Les inducteurs $I_1$ et $I_2$ sont raccordées tous deux par une de leur borne au point de jonction J. L'autre borne de l'inducteur $I_1$ est raccordée à une première borne de l'interrupteur $K_1$. La deuxième borne de l'interrupteur $K_1$ est raccordée à une première borne des deux capacités $C_{11}$ et $C_{12}$. La deuxième borne de la capacité $C_{11}$ est raccordée au pôle positif de la source de tension continue 1. La deuxième borne de la capacité $C_{12}$ est raccordée au pôle négatif de la source de tension continue 1. L'autre borne de l'inducteur $I_2$ est raccordée à une première borne de l'interrupteur $K_2$. La deuxième borne de l'interrupteur $K_2$ est raccordée a une première borne des deux capacités $C_{21}$ et $C_{22}$. La deuxième borne de la capacité $C_{21}$ est raccordée au pôle positif de la source de tension continue 1. La deuxième borne de la capacité $C_{22}$ est raccordée au pôle négatif de la source de tension continue 1.

Chaque circuit résonant peut être assimilé à un circuit RLC. En effet, pour le premier circuit résonant, l'inducteur $I_1$ peut être assimilé à une inductance $L_1$ montée en série avec une résistance non représentée. On note que l'inductance $L_1$ peut varier en fonction de l'ustensile de cuisine posé sur l'inducteur. En régime alternatif, les deux capacités $C_{11}$ et $C_{12}$ peuvent être considérées en parallèle et donc assimilées à une seule capacité $C_1$ égale à $C_{11} + C_{12}$. En pratique, on choisira avantageusement les capacités $C_{11}$ et $C_{12}$ de telle sorte que leur valeur nominale soit égale. Le premier circuit résonant peut donc être assimilé à une résistance $R_1$, une inductance $L_1$ et une capacité $C_1$, toutes trois montées en série. La fréquence de résonance $f_{R1}$ de ce premier circuit résonant peut être calculée suivant la formule

$$f_{R1} = 1/ (2 \pi \sqrt{L_1 C_1})$$

Le même raisonnement peut être fait pour le deuxième circuit résonant dont $L_2$ est l'inductance de l'inducteur $I_2$ et $C_2$ est une valeur égale à la somme des capacités $C_{21}$ et $C_{22}$. La fréquence de résonance $f_{R2}$ du deuxième circuit résonant peut alors être calculée suivant la formule

$$f_{R2} = 1/ (2 \pi \sqrt{L_2 C_2})$$

Le rôle de chaque interrupteur K1 ou K2 est de mettre en/ou hors service l'inducteur I1 ou I2 avec lequel il est raccordé. Lorsque les deux interrupteurs $K_1$ et $K_2$ sont ouverts, aucun inducteur n'est alimenté. Lorsqu'un seul des interrupteurs $K_1$ ou $K_2$ est fermé, le fonctionnement du dispositif revient au fonctionnement de l'art antérieur cité plus haut où on associe pour chaque inducteur, un générateur de puissance distinct. Le dispositif conforme à l'invention présente de l'intérêt quand les deux interrupteurs sont fermés. Néanmoins, pour une table de cuisson à induction, il est nécessaire de prévoir l'ouverture des interrupteurs pour laisser à l'utilisateur le choix d'utiliser ou non plusieurs inducteurs simultanément. En conséquence, pour la suite de l'exposé, on suppose que les deux interrupteurs $K_1$ et $K_2$ sont fermés.

A titre d'exemple, pour mieux comprendre l'invention, on donne les valeurs suivantes pour le premier circuit résonant : $L_1 = 60\ \mu H$, $C_1 = 1\ \mu F$. On a donc $f_{R1}$ = 20,5 kHz. La valeur $L_1 = 60\ \mu H$ est donnée pour un ustensile de cuisine donné, posé sur l'inducteur. Il est bien entendu que cette valeur varie en fonction des dimensions et du matériau de l'ustensile de cuisine. Bien entendu, la capacité $C_1$ est donnée par deux capacités $C_{11}$ et $C_{12}$ chacune de valeur 500 nF. Lorsque la fréquence de travail $f_T$ de l'onduleur est égale à la fréquence de résonance $f_{R1}$, l'inducteur $I_1$ génère dans l'ustensile de cuisine la plus grande puissance possible et lorsqu'on commande l'onduleur de façon à éloigner la fréquence de travail $f_T$ de la fréquence de résonance $f_{R1}$, la puissance générée par l'inducteur $I_1$ diminue. Pour les composants du deuxième circuit résonant, on donne les valeurs suivantes : $L_2 = 60\ \mu H$, $C_2 = 0,5\ \mu F$. On a donc $f_{R2}$ = 29 kHz. On a choisi volontairement des valeurs différentes pour $C_1$ et $C_2$ pour que les fréquences de résonance $f_{R1}$ et $f_{R2}$ soient distinctes. Ainsi, lorsqu'on fait varier la fréquence de travail $f_T$, on peut obtenir une variation de puissance générée par chaque inducteur. Par exemple si la fréquence de travail $f_T$ est égale à la fréquence de résonance $f_{R1}$ du premier circuit résonant, on a alors la puissance générée par le premier inducteur $I_1$ qui est

grande et la puissance générée par le deuxième inducteur $I_2$ qui est faible.

Si par la suite, on augmente la fréquence de travail $f_T$, on a alors la puissance générée par le premier inducteur $I_1$ qui diminue et tant que la fréquence de travail $f_T$ est inférieure à la fréquence de résonance $f_{R2}$ du deuxième circuit résonant, la puissance générée par le deuxième inducteur $I_2$ augmente. On peut augmenter la fréquence de travail $f_T$ au delà de la fréquence de résonance $f_{R2}$ ; alors la puissance générée par l'inducteur $I_2$ décroît, après être passée par un maximum lorsque la fréquence de travail $f_T$ était égale à la fréquence de résonance $f_{R2}$. On peut bien entendu imaginer que la fréquence de travail $f_T$ soit inférieure à la plus petite des fréquences de résonance, $f_{R1}$ dans l'exemple choisi. Ainsi, lorsque les deux interrupteurs $K_1$ et $K_2$ sont fermés, en faisant varier la fréquence de travail $f_T$, on peut faire croître et décroître les puissances générée par les deux inducteurs. En régime établi, c'est à dire en l'absence de modification consigne de la part de l'utilisateur, les interrupteurs ne sont pas manoeuvrés et les inducteurs, sont donc alimentés en permanence par l'onduleur 2, lorsqu'ils sont en service

Avantageusement, pour simplifier les moyens de commande des deux transistors $T_A$ et $T_B$, on ne fait pas varier la fréquence de travail $f_T$ depuis une valeur inférieure à $f_{R1}$ jusqu'à une valeur supérieure à $f_{R2}$. Il est en effet préférable de faire varier la fréquence de travail $f_T$ de telle sorte que le courant en sortie de l'onduleur, c'est-à-dire entre le point de jonction J et les circuits résonants, soit toujours en retard sur la tension au point J, ou soit toujours en avance. Ce choix permet de simplifier la stratégie de commande des transistors $T_A$ et $T_B$.

La figure 2 représente le schéma de principe général de l'invention adapté à une structure en pont complet de l'onduleur. L'onduleur comporte quatre transistors $T_A$, $T_B$, $T_C$, $T_D$ représentés dans deux cadres en traits interrompus 21 et 22. $T_A$ et $T_B$ sont dans le cadre 21 ; $T_C$ et $T_D$ sont dans le cadre 22. Les transistors $T_A$ et $T_B$ d'une part, $T_C$ et $T_D$ d'autre part sont montés en série entre les deux pôles de la source de tension continue 1. Le point de jonction des deux transistors $T_A$ et $T_B$ porte le repère $J_{21}$. Le point de jonction des deux transistors $T_C$ et $T_D$ porte le repère $J_{22}$. Par souci de simplicité, dans les cadres 21 et 22 on n'a pas représenté de diodes de roue libre ni de condensateurs d'aide à la commutation, mais il est bien entendu que ces composants peuvent exister.

L'onduleur 21, 22, transmet de l'énergie à deux circuits résonants. La figure 2 ne représente que deux circuits résonants et leurs moyens de sélection $K_1$ et $K_2$. Comme pour la figure 1 il est bien entendu que l'invention peut être mise en oeuvre pour un plus grand nombre de circuits résonants. Ces deux circuits résonants sont montés en parallèle entre les points de jonction $J_{21}$ et $J_{22}$. Le premier circuit résonant comporte en série les éléments suivants : un inducteur $I_1$, une capacité $C_1$ et un interrupteur $K_1$. Le deuxième circuit résonant comporte en série

un inducteur $I_2$, une capacité $C_2$ et un interrupteur $K_2$. Pour que le premier circuit résonant, décrit en figure 1, soit équivalent au premier circuit résonant décrit en figure 2, il suffit que la valeur de la capacité $C_1$ de la figure 2 soit égale à la somme des valeurs des capacités $C_{11}$ et $C_{12}$ décrites en figure 1. Si $C_{11}$ et $C_{12}$ ont chacune pour valeur 500 nF, alors $C_1$ a pour valeur 1 $\mu$F. Le fonctionnement du dispositif décrit à la figure 2 est semblable au fonctionnement du dispositif décrit à la figure 1. On fait varier la fréquence de travail de l'onduleur pour faire croître ou décroître les puissances générées par les inducteurs $I_1$ et $I_2$.

La structure en pont complet présente l'avantage, pour une même puissance générée par les inducteurs $I_1$ et $I_2$, de réduire l'intensité du courant passant dans chaque transistor. En revanche chaque circuit résonant est, pour une même source de tension continue 1, soumis à une plus forte différence de potentiel.

Les deux structures d'onduleur décrites en figures 1 et 2 ne sont données qu'à titre d'exemple, d'autres structures sont utilisables dans des dispositifs conformes à l'invention. On connaît par exemple une structure d'onduleur ne comportant qu'un seul transistor. Cette structure est connue sous le nom de structure mono-interrupteur, l'utilisation d'un transistor n'étant en effet donnée qu'à titre d'exemple.

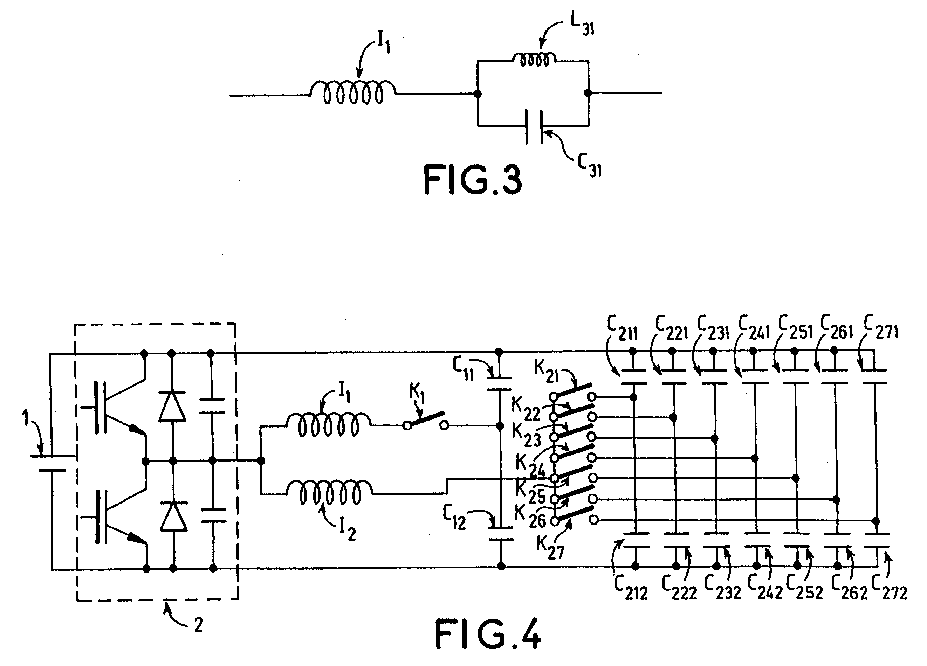

Les circuits résonants représentés en figures 1 et 2 sont des circuits résonants du premier ordre. Il est bien entendu possible d'utiliser des circuits d'ordre supérieur pour mettre en oeuvre l'invention. Un exemple de circuit du deuxième ordre est décrit figure 3. Ce circuit est représenté sans l'onduleur qui l'alimente, il est bien sûr envisageable de l'alimenter avec un onduleur quelque soit sa structure comme par exemple demi-pont, pont complet ou mono-interrupteur. Ce circuit comporte, en série avec l'inducteur $I_1$, deux composants montés en parallèle, une capacité $C_{31}$ et une inductance $L_{31}$. Ce circuit présente deux maxima de puissance. Ceci permet de pouvoir régler, avec plus de souplesse, les puissances relatives consommées par les inducteurs de plusieurs circuits résonants raccordés en parallèle. Les différents circuits résonants ne sont pas obligatoirement tous du même ordre.

La figure 4 donne un exemple de moyen permettant de faire varier la fréquence de résonance $f_{R2}$ du deuxième circuit résonant et ainsi d'améliorer la souplesse de réglage des puissances générées par les deux inducteurs $I_1$ et $I_2$. Le premier circuit résonant est identique à celui représenté à la figure 1. Le second circuit résonant comporte aussi, comme à la figure 1 l'inducteur $I_2$, mais à la différence de la figure 1, le deuxième circuit résonant comporte plusieurs interrupteurs $K_{21}$ à $K_{27}$ raccordés par leur première borne à la borne de l'inducteur $I_2$ non raccordée à l'onduleur 2. La deuxième borne de l'interrupteur $K_{21}$ est reliée à une première borne de deux capacités $C_{211}$ et $C_{212}$. La deuxième borne de la capacité $C_{211}$ est reliée au pôle positif de la source de tension continue 1 et la deuxième borne de la capacité $C_{212}$ est

reliée au pôle négatif de la source de tension continue 1. Comme pour l'interrupteur $K_{21}$, la deuxième borne de chaque autre interrupteur $K_{22}$ à $K_{27}$ est raccordée à une première borne de deux capacités dont la deuxième borne est raccordée soit au pôle positif soit au pôle négatif de la source de tension continue. A l'interrupteur $K_{2i}$ correspond la capacité $C_{2i1}$ reliée au pôle positif et la capacité $C_{2i2}$ reliée au pôle négatif. Dans la représentation de la figure 4, i varie de 1 à 7. Il est bien entendu que l'invention n'est pas limitée à 7 structures comprenant chacune un interrupteur et deux capacités.

La figure 4 donne un exemple de dispositif permettant de faire varier la capacité du deuxième circuit résonant. La variation de la capacité permet de faire varier la fréquence de résonance $f_{R2}$ et donc de régler la puissance générée par chacun des deux inducteurs $I_1$ et $I_2$ indépendamment l'un de l'autre. Lorsque l'interrupteur $K_1$ est fermé, on règle la fréquence de travail $f_T$ de l'onduleur en fonction de la puissance que l'on souhaite générer par l'inducteur $I_1$. Ensuite pour régler la puissance que l'on souhaite générer par l'inducteur $I_2$, on ferme un ou plusieurs interrupteurs $K_{2i}$ de façon à faire varier la fréquence de résonance $f_{R2}$ du deuxième circuit résonant. Lorsqu'on souhaite générer une puissance importante par l'inducteur $I_2$, on ferme le ou les interrupteurs $K_{2i}$ nécessaires pour que la fréquence de résonance $f_{R2}$ soit la plus proche possible de $f_T$. Si au contraire, on souhaite générer une puissance plus faible par l'inducteur $I_2$, on ferme le ou les interrupteurs $K_{2i}$ nécessaires pour que la fréquence de résonance $f_{R2}$ s'éloigne de $f_T$. Comme pour les variantes représentées figures 1 et 2, les interrupteurs $K_{2i}$ ont pour fonction la mise en ou hors service des inducteurs. De plus, ils sont manoeuvrés lorsque l'utilisateur souhaite modifier la puissance d'un des inducteurs. En régime permanent, c'est à dire en l'absence de modification de consigne par l'utilisateur de la puissance à générer, les interrupteurs ne sont pas manoeuvrés et les inducteurs sont donc alimentés en permanence par l'onduleur 2, lorsqu'il sont en service.

Le mode de réalisation décrit figure 4 permet de faire varier la fréquence de résonance par pas successifs. Les capacités permettant de faire varier la fréquence de résonance sont associées en parallèle, il est possible de les associer en série avec des interrupteurs permettant de les court-circuiter. On peut aussi combiner l'association série et parallèle. Si par contre on souhaite faire varier cette fréquence sans à coup, il est possible de remplacer les interrupteurs et les capacités du deuxième circuit résonant par un seul interrupteur, permettant la coupure du circuit résonant et une ou plusieurs capacités variables. De façon générale, on regroupera sous le nom de capacité modulable tout moyen permettant de faire varier la valeur d'une capacité que ce soit avec ou sans à coup.

On peut également imaginer, pour faire varier la fréquence de résonance du deuxième circuit résonant, de faire varier la valeur d'une inductance appartenant à ce circuit, comme par exemple l'inductance $L_1$ ou $L_2$ et/ou

l'inductance $L_{31}$ du circuit représenté figure 3. La variation de l'inductance peut se faire de façon continue ou pas à pas comme pour les condensateurs de la figure 4.

Le mode de réalisation décrit figure 4 ne comporte que deux circuits résonants, mais il est bien entendu qu'on peut utiliser cette conception pour un nombre plus grand de circuits résonants. Avantageusement chaque circuit résonant supplémentaire, à partir du troisième, comportera également, comme le deuxième circuit résonant, des moyens pour faire varier sa fréquence de résonance. Par la suite on nommera le circuit résonant dont la fréquence de résonance est fixe : circuit maître (premier circuit résonant de la figure 4). Les autres circuits dont on peut régler la fréquence de résonance seront nommés circuits esclaves.

Il est possible de faire fonctionner l'ensemble des circuits résonants à puissance maximale dite nominale. Dans ce cas, on règle la fréquence de résonance des circuits esclaves de sorte qu'elle soit égale à la fréquence de résonance du circuit maître. On règle la fréquence de travail $f_T$ au voisinage de la fréquence de résonance des circuits résonants. Pour que le dispositif fonctionne de façon satisfaisante, il est nécessaire que l'onduleur puisse délivrer la somme des puissances nominales de chaque circuit résonant. L'onduleur ainsi dimensionné présente l'avantage de pouvoir alimenter un ou plusieurs circuits résonants particuliers à une puissance supérieure à sa puissance nominale lorsque les autres circuits sont alimentés à une puissance inférieure à leur puissance nominale. Ainsi, on distribue à volonté la puissance maximale disponible en sortie de l'onduleur vers les différents inducteurs. On peut même autoriser le générateur de puissance à délivrer toute sa puissance disponible vers un inducteur pendant une durée limitée, par exemple quelques minutes, durée bien entendue inférieure à la constante de temps thermique de l'inducteur. En effet, dans le domaine de la cuisson domestique, l'ordre de grandeur de la constante de temps thermique d'un inducteur peut être de 30 minutes, ce qui est très nettement supérieur au temps nécessaire pour certaines préparations culinaires. Pour illustrer cet avantage, on peut citer un mode de cuisson des pâtes. On commence par faire bouillir de l'eau à forte puissance puis, après avoir plongé les pâtes dans l'eau bouillante, on réduit la puissance pour conserver l'eau frémissante. Afin de réduire le temps de la première phase, qui consiste à amener l'eau à ébullition, il est intéressant d'augmenter le plus possible la puissance générée par l'inducteur. Ceci présente un avantage important par rapport à l'art antérieur cité plu haut où on associe pour chaque inducteur, un générateur de puissance. Dans cet art antérieur, si on souhaite dépasser la puissance nominale d'un inducteur, on est tenu de surdimensionner l'onduleur associé, ce qui entraîne un surcoût notable.

## Revendications

1.  Dispositif d'alimentation de plusieurs circuits résonants montés en parallèle par un générateur de puissance à onduleur (2), **caractérisé en ce que** chaque circuit résonant ($I_1$, $C_{11}$, $C_{12}$ ; $I_2$, $C_{21}$, $C_{22}$ ; $I_1$, $C_1$ ; $I_2$, $C_2$ ; $I_1$, $L_{31}$, $C_{31}$ ; $I_2$, $C_{211}$ à $C_{272}$) a une fréquence de résonance ($f_{R1}$, $f_{R2}$) distincte, **en ce que** le générateur (1, 2 ; 1, 21, 22) alimente en permanence les circuits résonants et **en ce que** le réglage de la puissance consommée par chaque circuit résonant est réalisé en modifiant la fréquence de travail ($f_T$) de l'onduleur 2.

2.  Dispositif selon la revendication 1, **caractérisé en ce qu'**au moins un circuit résonant comporte un moyen pour faire varier sa fréquence de résonance ($f_{R2}$).

3.  Dispositif selon la revendication 2, **caractérisé en ce que** le moyen comporte une capacité et **en ce que** la valeur de la capacité ($C_2$ ; $C_{21}$, $C_{22}$ ; $C_{2i1}$, $C_{2i2}$) est modulable.

4.  Dispositif selon la revendication 3, **caractérisé en ce que** la modulation de valeur de la capacité est réalisée au moyen de plusieurs capacités ($C_{2i1}$,$C_{2i2}$) que l'on peut associer au moyen d'interrupteurs ($K_{2i}$).

5.  Dispositif selon la revendication 4, **caractérisé en ce que** les capacités ($C_{2i1}$,$C_{2i2}$) sont associées en parallèle.

6.  Dispositif selon l'une des revendications précédentes, **caractérisé en ce que** la fréquence de travail ($f_T$) est choisie de telle sorte que le courant en sortie de l'onduleur (2) soit toujours en retard sur la tension de sortie de l'onduleur (2).

7.  Dispositif selon l'une des revendications précédentes, **caractérisé en ce que** l'on distribue à volonté la puissance maximale disponible en sortie du générateur (1, 2 ; 1, 21, 22) vers les différents inducteurs ($I_1$, $I_2$).

8.  Dispositif selon la revendication 2, **caractérisé en ce que** ledit moyen comporte une inductance et **en ce que** la valeur de l'inductance ($L_1$, $L_2$ ; $L_{31}$) est variable.

## Claims

1.  Device for supplying several resonant circuits connected in parallel by means of an inverter-type power generator (2), **characterised in that** each resonant circuit ($I_1$, $C_{11}$, $C_{12}$; $I_2$, $C_{21}$, $C_{22}$; $I_1$, $C_1$; $I_2$, $C_2$; $I_1$, $L_{31}$, $C_{31}$; $I_2$, $C_{211}$ to $C_{272}$) at a distinct resonant frequency ($f_{R1}$, $f_{R2}$), **in that** the generator (1, 2; 1, 21, 22) supplies the resonant circuits continuously and **in that** the power consumed by each resonant circuit is adjusted by modifying the working frequency ($f_T$) of the inverter (2).

2.  Device according to claim 1, **characterised in that** at least one resonant circuit comprises a means for varying its resonant frequency ($f_{R2}$).

3.  Device according to claim 2, **characterised in that** the means comprises a capacitance and **in that** the value of the capacitance ($C_2$; $C_{21}$, $C_{22}$; $C_{2i1}$, $C_{2i2}$) can be modulated.

4.  Device according to claim 3, **characterised in that** the value of the capacitance is modulated by means of several capacitances ($C_{2i1}$, $C_{2i2}$) that can be associated by means of switches ($K_{2i}$).

5.  Device according to claim 4, **characterised in that** the capacitances ($C_{2i1}$, $C_{2i2}$) are associated in parallel.

6.  Device according to one of the preceding claims, **characterised in that** the working frequency ($f_T$) is chosen so that the current output from the inverter (2) is always delayed compared with the output voltage of the inverter (2).

7.  Device according to one of the preceding claims, **characterised in that** the maximum power available at the output from the generator (1, 2; 1, 21, 22) is distributed as required to the various inductors ($I_1$, $I_2$).

8.  Device according to claim 2, **characterised in that** the said means comprises an inductance and **in that** the value of the inductance ($L_1$, $L_2$; $L_{31}$) is variable.

## Patentansprüche

1.  Vorrichtung zur Versorgung mehrerer, parallel geschalteter Resonanzkreise durch einen Leistungsgenerator mit Wechselrichter (2), **dadurch gekennzeichnet, dass** jeder Resonanzkreis ($I_1$, $C_{11}$, $C_{12}$; $I_2$, $C_{21}$, $C_{22}$; $I_1$, $C_1$; $I_2$, $C_2$; $I_1$, $L_{31}$, $C_{31}$; $I_2$, $C_{211}$ bis $C_{272}$) eine andere Resonanzfrequenz ($f_{R1}$, $f_{R2}$) besitzt, dass der Generator (1, 2; 1, 21, 22) die Resonanzkreise permanent versorgt und dass das Einstellen der von jedem Resonanzkreis verbrauchten Leistung durch Änderung der Arbeitsfrequenz ($f_T$) des Wechselrichters (2) erfolgt.

2.  Vorrichtung nach Anspruch 1, **dadurch gekennzeichnet, dass** mindestens ein Resonanzkreis ein Mittel zur Veränderung seiner Resonanzfrequenz ($f_{R2}$) aufweist.

3. Vorrichtung nach Anspruch 2, **dadurch gekennzeichnet, dass** das Mittel eine Kapazität aufweist und der Wert der Kapazität ($C_2$; $C_{21}$, $C_{22}$; $C_{2i1}$, $C_{2i2}$) geändert werden kann.

4. Vorrichtung nach Anspruch 3, **dadurch gekennzeichnet, dass** die Änderung des Werts der Kapazität mittels mehrerer Kapazitäten ($C_{2i1}$, $C_{2i2}$) erfolgt, die durch Schalter ($K_{2i}$) verbunden werden können.

5. Vorrichtung nach Anspruch 4, **dadurch gekennzeichnet, dass** die Kapazitäten ($C_{2i1}$, $C_{2i2}$) parallel verbunden sind.

6. Vorrichtung nach einem der vorhergehenden Ansprüche, **dadurch gekennzeichnet, dass** die Arbeitsfrequenz ($f_T$) so gewählt ist, dass der Strom am Ausgang des Wechselrichters (2) in Bezug auf die Ausgangsspannung des Wechselrichters (2) immer nacheilend ist.

7. Vorrichtung nach einem der vorhergehenden Ansprüche, **dadurch gekennzeichnet, dass** die maximale Leistung, die am Ausgang des Generators (1, 2; 1, 21, 22) verfügbar ist, nach Belieben zu den unterschiedlichen Induktoren ($I_1$, $I_2$) verteilt wird.

8. Vorrichtung nach Anspruch 2, **dadurch gekennzeichnet, dass** das Mittel eine Induktivität aufweist und der Wert der Induktivität ($L_2$, $L_2$; $L_{31}$) variabel ist.

FIG.1

FIG.2

8

**FIG.3**

**FIG.4**